Europäisches Patentamt

European Patent Office

Office européen des brevets

(11) Veröffentlichungsnummer: **0 327 902**

**A1**

# (12) EUROPÄISCHE PATENTANMELDUNG

(21) Anmeldenummer: 89101410.2

(22) Anmeldetag: 27.01.89

(51) Int. Cl.4: **C01F 11/02 , C04B 2/04**

(30) Priorität: 11.02.88 DE 3804180

(43) Veröffentlichungstag der Anmeldung:
16.08.89 Patentblatt 89/33

(84) Benannte Vertragsstaaten:
AT BE CH DE ES FR GB GR IT LI NL

(71) Anmelder: Rheinische Kalksteinwerke GmbH.
Wilhelmstrasse 77
D-5603 Wülfrath(DE)

(72) Erfinder: Hörster, Eberhard
Schulstrasse 15
D-5603 Wülfrath(DE)
Erfinder: Märtens, Dietmar
Am Wasserturm 54
D-5603 Wülfrath(DE)
Erfinder: Roeder, Alfred, Dr.
Falkstrasse 112
D-4100 Duisburg(DE)
Erfinder: Radermacher, Günter, Dr.
Tillmannsdorferstrasse 3
D-5603 Wülfrath(DE)
Erfinder: Schmitz, Friedrich, Dr.

verstorben(DE)

(74) Vertreter: Patentanwaltsbüro Cohausz &
Florack
Schumannstrasse 97
D-4000 Düsseldorf 1(DE)

(54) Verfahren zur Herstellung von trockenem, feindispersem Calciumhydroxid.

(57) Die vorliegende Erfindung betrifft ein Verfahren zur Herstellung von trockenem, feindispersem Calciumhydroxid ($Ca(OH)_2$) (10), bei dem auf übliche Weise nass-oder trockengelöschter Kalk (1, 2) in einer flüssigen Phase suspendiert (3), der Massenanteil an Calciumhydroxid in der Suspension auf 10 bis 80 % eingestellt, die Suspension einer mechanischen Beanspruchung (5) unterworfen, anschließend die Flüssigkeit nach einer Fest-Flüssig-Trennung (7) durch schonendes Trocknen (8) entfernt wird und das getrocknete Calciumhydroxid aufgelockert wird (9).

Fig 1

## Verfahren zur Herstellung von trockenem, feindispersem Calciumhydroxid

Die Erfindung betrifft ein Verfahren zur Herstellung von trockenem, feindispersem Calciumhydroxid (Ca-(OH)$_2$) mit großer spezifischer Oberfläche aus einer Calciumhydroxid-Suspension.

Handelsübliches, nach dem Verfahren der sogenannten "Trockenlöschung" hergestelltes Calciumhydroxid weist im allgemeinen eine spezifische Oberfläche von 15 bis 18 m$^2$/g, naßgelöschte Calciumhydroxide solche von 25 bis 30 m$^2$/g, auf. Da Calciumhydroxid heute in zunehmendem Maße für Zwecke verwandt wird, bei denen das Absorptionsverhalten im Vordergrund steht, werden im Hinblick auf die spezifische Oberfläche und eine feindisperse Verteilung höhere Ansprüche gestellt.

Eine gewisse Vergrößerung der Oberfläche trockengelöschter Calciumhydroxide kann erzielt werden, wenn das Calciumhydroxid vor dem Einsatz in Trockensorptionsanlagen einem trockenen Mahlprozeß, z.B. in Kugelmühlen unterworfen wird. Durch Trockenmahlen lassen sich dabei, abhängig vom Mühlentyp und Mahldauer, Oberflächen von ca. 20 bis 25 m$^2$/g erzielen, allerdings bilden sich durch den Mahlvorgang leicht Agglomerate, die zu einer Herabsetzung der Dispersität führen.

In der Praxis, insbesondere bei der Rauchgasreinigung nach den Trockensorptionsverfahren hat sich jedoch gezeigt, daß es vorteilhaft ist, wenn die spezifische Oberfläche größer als 30 m$^2$/g beträgt. Es ist zum Beispiel möglich, aus speziellen Verfahren zur Trockenlöschung ein Calciumhydroxid zu erhalten, das eine spezifische Oberfläche von größer als 35 m$^2$/g aufweist, feindispers ist und auch eine gute Fließfähigkeit hat.

Aus der DE-PS 34 33 228 ist z.B. bekannt, wie durch Reaktionsführung und Steuerung der einzelnen Reaktionsschritte der Einsatz von reaktionsfähigen Kalken auch großtechnisch ermöglicht wird. Diese Schrift betrifft ein Verfahren zum Löschen von Kalk mit einer speziellen Löschflüssigkeit, die ein Gemisch aus Wasser und reaktionsverzögernden Lösungsmitteln ist. Die spezifische Oberfläche des erhaltenen Produktes kann größer als 30m$^2$/g sein. Das Verfahren eignet sich auch für kontinuierlichen Betrieb, bedarf aber wegen der Verwendung von Alkohol beim Löschen des Kalkes sicherheitstechnischer Vorkehrungen, die erst bei größeren Anlagen wirtschaftlich betrieben werden können.

Aus der DE 36 20 024 ist ebenfalls ein Löschverfahren bekannt. Hierbei wird feinkörniges Calciumhydroxid durch Umsetzung von Calciumoxid mit Wasser und Zusatzstoffen hergestellt. Auch hier lassen sich Produkte mit großer Oberfläche erzielen, deren Dispersität jedoch beim Trocknen wieder verloren geht.

Der Erfindung liegt daher die Aufgabe zugrunde, in einem einfacher zu betreibenden Verfahren ein Calciumhydroxid mit einer spezifischen Oberfläche größer als 30 m$^2$/g herzustellen, bei dem der Massenanteil an Teilchen mit einer Korngröße kleiner als 0,9 μm mindestens 10 % beträgt.

Dies wird dadurch erreicht, daß aus der Naßlöschung erhaltenes Calciumhydroxid in Wasser oder ein aus der Trockenlöschung erhaltenes Calciumhydroxid in Wasser oder einem organischen Lösungsmittel suspendiert wird, der Massenanteil an Calciumhydroxid in der Suspension auf 10 bis 80 %, vorzugsweise 15 bis 65 % eingestellt wird, die Suspension einer mechanischen Beanspruchung unterworfen wird, anschließend nach einer Fest-Flüssig-Trennung die Restflüssigkeit in Calciumhydroxid durch schonendes Trocknen entfernt wird und das getrocknete Calciumhydroxid aufgelockert wird.

Als organische Lösungsmittel sind vorzugsweise Alkohole, aromatische Kohlenwasserstoffe, halogenierte Kohlenwasserstoffe oder Ether geeignet.

Bei dem eingesetzten Calciumhydroxid handelt es sich um in üblicher Weise gelöschten Kalk. In Betracht kommt sowohl aus der Trockenlöschung als auch aus der Naßlöschung erhaltener Kalk. Letzteres kann auch ohne vorherige Einstellung eines bestimmten Wasser-Calciumhyroxid-Verhältnisses direkt nach dem erfindungsgemäßen Verfahren behandelt werden.

Die Erfindung betrifft demnach im Gegensatz zu den obengenannten Literaturstellen nicht ein Verfahren zum Löschen von Kalk. Demgemäß dienen die für das erfindungsgemäße Verfahren eingesetzten Gemische aus Wasser und organischen Lösungsmitteln nicht als Löschmittel. Vielmehr ist es Zweck des erfindungsgemäßen Verfahrens, bereits gelöschten Kalk gezielt zu veredeln, so daß ein Produkt mit einer spezifischen Oberfläche größer als 30 m$^2$/g entsteht, bei dem der Massenanteil an Teilchen mit einer Korngröße kleiner als 0,9 μm wenigstens 10 beträgt. Erfindungswesentlich ist, daß durch die erfindungsgemäße Behandlung von bereits zuvor gelöschtem Kalk eine Dispersität erhalten wird, die nicht - wie sonst üblich beim Trocknen - wieder verloren geht. Ohne die besondere erfindungsgemäße Behandlungsweise von gelöschtem Kalk läßt sich dieses Ergebnis nicht erreichen, auch nicht mit den Verfahren gemäß DE 34 33 228 und 36 20 024.

Für Suspendierung wird im Falle der Verwendung eines aus der Naßlöschung erhaltenes Calciumhydroxids Wasser eingesetzt. Calciumhydroxid aus der Trockenlöschung kann in Wasser oder einem organischen Lösungsmittel suspendiert werden.

Verfahren zur Herstellung von Hydratsuspensionen sind z.B. in der DE-PS 27 14 858 und W. Ohnemüller: Die Eigenschaft naßmechanisch aufbereiteter Kalkhydrate, Tonindustrie-Zeitung 89 (1965), Nr. 9/10, Seiten 198 bis 202 beschrieben.

Eine für das erfindungsgemäße Verfahren geeignete Calciumhydroxid-Suspension kann aber auch in der Weise hergestellt werden, daß Calciumhydroxid mit Wasser oder einem organischen Lösungsmittel in einer solchen Menge gemischt wird, daß die Verarbeitung in der jeweiligen Anlage ermöglicht wird, daß dann solange Scherkräfte in die Mischung eingetragen werden, bis ein größerer Teil des Calciumhydroxids auf Primärkorngröße desagglomeriert ist, worauf eine der jeweiligen späteren Anwendung der Suspension angepaßte Flüssigkeitsmenge zugesetzt wird. Die Primärkorngröße liegt bei etwa 1,5 $\mu$m. Insbesondere sollen die Scherkräfte solange auf die Mischung einwirken, bis alle Körner eine Korngröße unter 10 um aufweisen und mindestens 15 % des Calciumhydroxidanteils der Mischung eine Korngröße unter 1 $\mu$m haben. Eine nach dem diesen Verfahren hergestellte Calciumhydroxid-Suspension ist sedimentationsstabil, das heißt es sedimentiert nach längerer Abstehzeit kein Calciumhydroxid. Die hergestellte Calciumhydroxid-Suspension ist ferner hochreaktiv.

Untersuchungen des Feststoffanteils der Calciumhydroxid-Suspension haben ergeben, daß es überraschenderweise gelingt, das gesamte Kornspektrum zu jeweils niedrigeren Korngrößen zu verlagern. Dabei wurde der Anteil Grobkorn verringert, die gröbste Kornfraktion nahezu halbiert und der Feinkornanteil wurde erheblich vergrößert, zum Teil verdoppelt. Der bei herkömmlichem Calciumhydroxid in der Größenordnung von 10 % liegende Feinanteil unter 1 $\mu$m konnte durch die Verarbeitung mehr als verdoppelt, teilweise sogar vervierfacht werden. Diese Erhöhung des Feinkornanteils ist sowohl für die Reaktivität als auch die Sedimentationsstabilität ausschlaggebend.

Es hat sich als vorteilhaft herausgestellt, daß der Suspension ein die Oberflächenspannung herabsetzendes Mittel in Massenanteilen von 0,2 bis 2,5 %, bezogen auf das Calciumhydroxid, zugegeben wird, das die Oberflächenspannung um mindestens 25 % senkt. Dafür eignen sich z.B. Tenside.

Die mechanische Bearbeitung kann in einem Kollergang erfolgen. Bei einer pastösen Suspension mit einem Massenanteil an Calciumhydroxid von 40 bis 80 %, vorzugsweise 55 bis 65 %, kann die mechanische Beanspruchung durch Kneten, Walzen, Pressen, Stampfen, Reiben, Spritzen oder durch Anwendung energiereicher Schwingungen erfolgen. Dabei werden die Agglomerate zerstört. Bei einem Massenanteil an Calciumhydroxid in der Suspension von 10 bis 40 %, vorzugsweise 15 bis 30 %, kann die mechanische Beanspruchung durch Mahlen, vorzugsweise in einer Perl- oder Kugelmühle, durch intensives Rühren oder durch Spritzen gegen Prallkörper erfolgen.

Vor dem schonenden Trocknen, insbesondere wenn Wasser als flüssige Phase eingesetzt worden ist, kann das Hydroxid in einem ein- oder mehrstufigen Waschprozeß mit organischen Lösungsmitteln, vorzugsweise mit Alkoholen z.B. Ethylalkohol, mit aromatischen Kohlenwasserstoffen, halogenierten Kohlenwasserstoffen oder Ethern behandelt werden.

Die Suspension wird vor dem schonenden Trocknen einer Fest-Flüssig-Trennung unterworfen, z.B. durch Destillation und ggf. unter Vorschalten einer Zentrifuge. Das schonende Trocknen selbst wird vorzugsweise in einem Vakuumtrockner durchgeführt.

Nach schonendem Trocknen und Auflockern z.B. in einer Stiftmühle erhält man ein Calciumhydroxid als feindisperses, gut fließfähiges Produkt, das sich insbesondere bei den Rauchgasreinigungsverfahren nach dem "Trockensorptionsverfahren" als hochwirksam erweist.

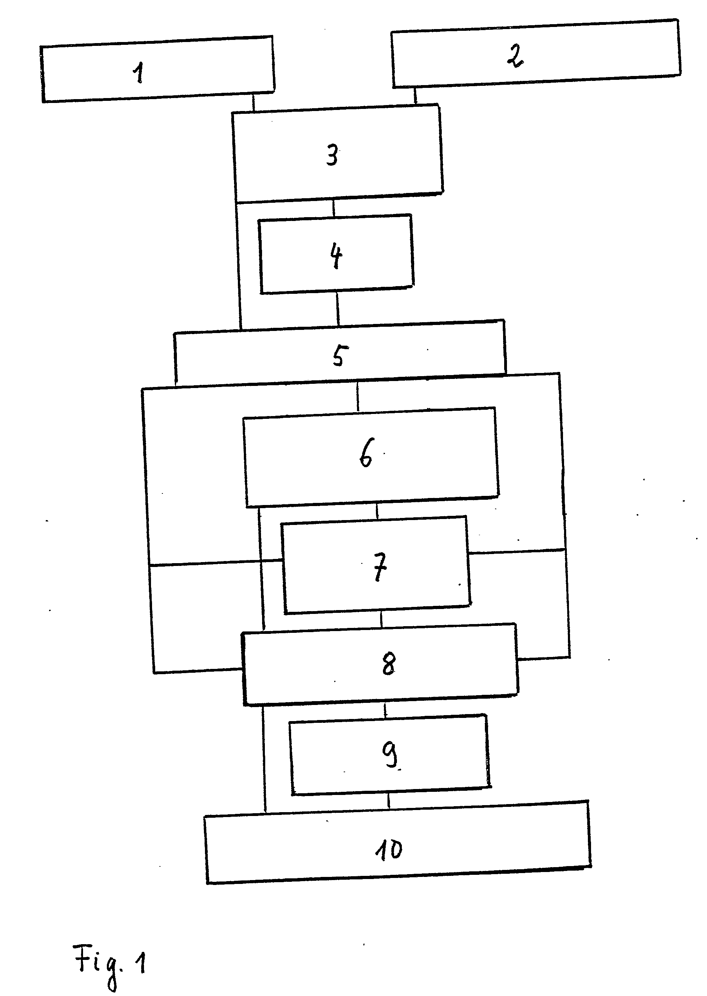

Die Figuren 1 bis 3 zeigen Fließschemata des erfindungsgemäßen Verfahrens.

In Figur 1 ist der prinzipielle Verfahrensablauf dargestellt. Danach werden Hydroxid + Wasser (1) bzw. Hydroxid aus der Naßlöschung (2) in einem Behälter suspendiert (3). Diese Suspension wird, ggf. nach Zusatz eines Netzmittels (4) in einer Menge von 0,2 - 2,5 %, einer mechanischen Beanspruchung (5) unterworfen, nachdem ein die Oberfächenspannung herabsetzendes Mittel zugesetzt worden ist. Die mechanische Beanspruchung kann auch erfolgen, ohne daß zuvor ein Netzmittel zugesetzt worden ist. In einem Schritt erfolgt das Waschen (6) mit organischen Lösungsmitteln. Das Abtrennen (7) kann jedoch auch erfolgen, ohne daß zuvor Schritt (6) ausgeführt worden ist. Nach dem Abtrennen erfolgt das Trocknen (8). Hier besteht die alternative Möglichkeit, die Schritt (6) und (7) wegzulassen und direkt Schritt (8) an Schritt (5) anzuschließen. Ebenso kann Schritt (8) an Schritt (6) angeschlossen werden. Nach dem Auflockern (9) wird das trockene, feindisperse Hydroxid (10) erhalten.

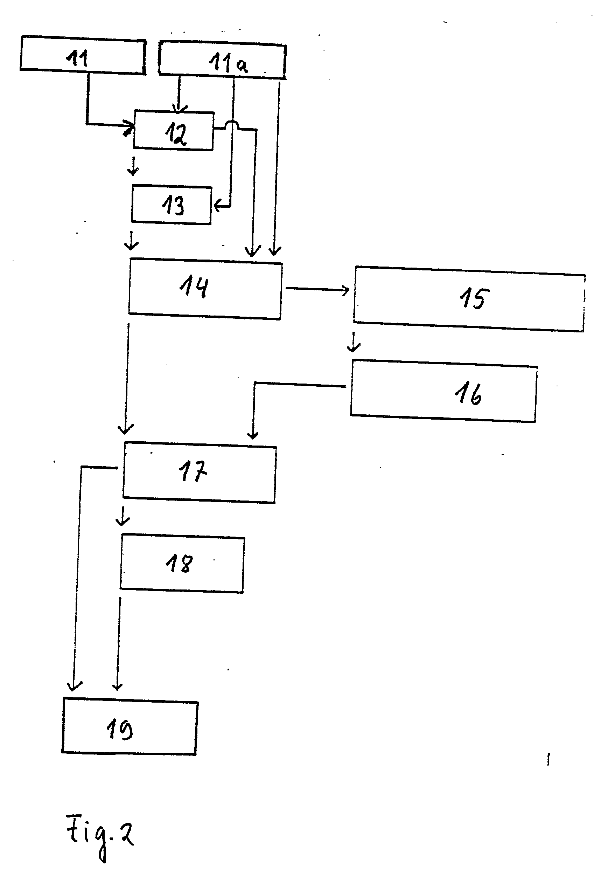

Figur 2 stellt den grundsätzlichen Verfahrensablauf für den Fall dar, daß die Calciumhydroxid-Suspension durch Zusatz von Wasser hergestellt wird. Das Hydroxid (11) wird zunächst mit Wasser versetzt (12) und anschließend mit dem Tensid gemischt (13). Der letztere Schritt kann auch übersprungen werden, so daß die Suspension direkt der mechanischen Beanspruchung (14) zugeführt wird. Dann erfolgt das Waschen (15) mit organischen Lösungsmitteln und die Abtrennung der flüssigen Phase (16). Daran schließt sich der Trocknungsschritt (17) an. Diese Verfahrensstufe kann sich jedoch auch direkt an den Verfahrensschritt (14) anschließen. Nach der Auflockerung (18) wird schließlich das Hydroxid mit großer Oberfläche (19) erhalten.

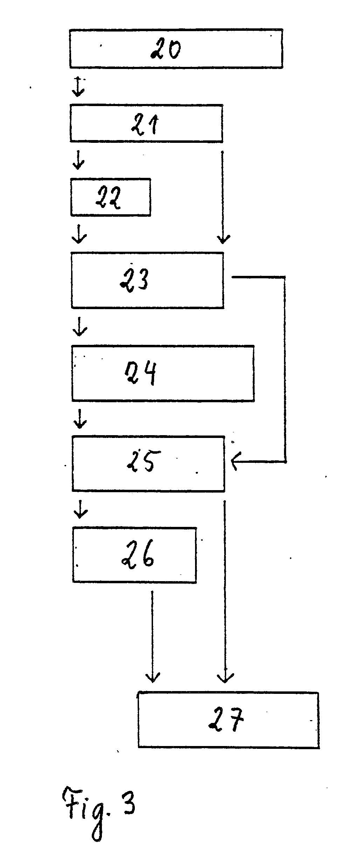

Figur 3 betrifft schließlich den Verfahrensablauf, bei dem statt des Wassers ein organisches Lösungsmittel für die Herstellung der Calciumhydroxidsuspension verwendet wird. Hierbei wird das Hydroxid aus der Trockenlöschung (20) mit dem organischen Lösungsmittel versetzt (21). Die so erhaltene Suspension wird entweder direkt der mechanischen Beanspruchung (23) oder erst nach Zusatz des Netzmittels (22) zugeführt. An die mechanische Beanspruchung schließt sich die Abtrennung (24) oder auch direkt der Trocknungsschritt (25) an. Nach der Auflockerung (26) wird ein Hydroxid mit großer Oberfläche (27) erhalten.

Die Erfindung wird anhand von Beispielen näher erläutert.

## A. Herstellung von trockenem feindispersem Calciumhydroxid

### Beispiel 1

100 kg Calciumhydroxid-Pulver (spezifische Oberfläche 17 m²/g) werden in einem Doppelwellenmischer mit 60 l Wasser angeteigt. Der Suspension werden 2 kg Alkylbenzolsulfonat zugegeben. Die aus dem Doppelwellenmischer austretende krümelig-plastische Masse wird zur knetenden Behandlung einem aus der Tonaufbereitung bekannten Siebrundbeschicker aufgegeben. Die Sieblochweite der Siebplatte beträgt 8 mm. Schon nach dem Durchgang erhält man ein Produkt, das nach Trocknen unter Anwendung von Mikrowellenenergie auf eine Restfeuchte von unter 1 % und anschließendem Auflockern eine spezifische Oberfläche von 34,5 m²/g aufweist und bei dem der Massenanteil an Körnern unter 0,9 μm 10 % beträgt.

### Beispiel 2

Zu 1,5 kg Calciumhydroxid-Pulver (spezifischer Oberfläche 17 m²/g) werden 6 l Wasser zugegeben. Die wäßrige Suspension wird in einer Perlmühle in 4-minütigem Umlauf aufbereitet. Nach dreimaligem Waschen mit Ethylalkohol, Trocknen im Vakuumtrockner und anschließendem Auflockern weist das Produkt eine spezifische Oberfläche von 32 m²/g und einen Massenanteil an Körnern unter 0,9 μm von 13,5 % auf.

### Beispiel 3

1,5 kg Weißfeinkalk (CaO) wird naßgelöscht (1 Teil Kalk und 4 Teile Wasser). Anschließend wird durch Zugabe von Wasser und 20 g Alkylbenzolsulfonat die Suspension auf einen Massenanteil an Calciumhydroxid von 20 % verdünnt. Diese Suspension wird wie im Beispiel 2 in einer Perlmühle aufgemahlen, dann in einem Kammertrockner getrocknet und anschließend in einer Stiftmühle aufgelockert. Das erhaltene Produkt weist eine spezifische Oberfläche von 33 m²/g und einen Massenanteil von Körnern unter 0,9 μm von 18 % auf.

### Beispiel 4

1,5 Calciumhydroxid-Pulver (spezifische Oberfläche m²/g) wird in 6 kg Ethanol suspendiert. Der Suspension werden 22,5 g Alkylethersulfat zugegeben. Die Suspension wird in einer Perlmühle behandelt. Nach zweimaligem Umlauf wird ein Teil des Alkohols mittels einer Zentrifuge abgetrennt und der Kuchen in einem Vakuumtrockner bis auf einen Restalkoholgehalt von 0,7 % getrocknet. Das erhaltene Produkt weist eine spezifische Oberfläche von 32 m²/g und einen Massenanteil an Körnern unter 0,9 μm von 13,5 auf.

## B. Herstellung einer Calciumhydroxid-Suspension

EP 0 327 902 A1

## Beispiel 5

Im Kollergang wurde die Calciumhydroxid-Wasser-Mischung mit 60 % Calciumhydroxidanteil 30 min bearbeitet. Danach verblieb nach 24 h von einer 2000 ml-Probe eine homogene Suspension. Demgegenüber betrug das Sedimentvolumen einer nicht nach dem erfindungsgemäßen Verfahren verarbeiteten wäßrigen Kalkhydroxid-Suspension 500 ml.

Nach 30-minütiger Bearbeitungszeit vergrößerte sich die spezifische Oberfläche aufgrund der Bearbeitung im Kollergang von 17 m²/g auf 35 m²/g. Die optimale Bearbeitungszeit im Kollergang ist 30 bis 60 min.

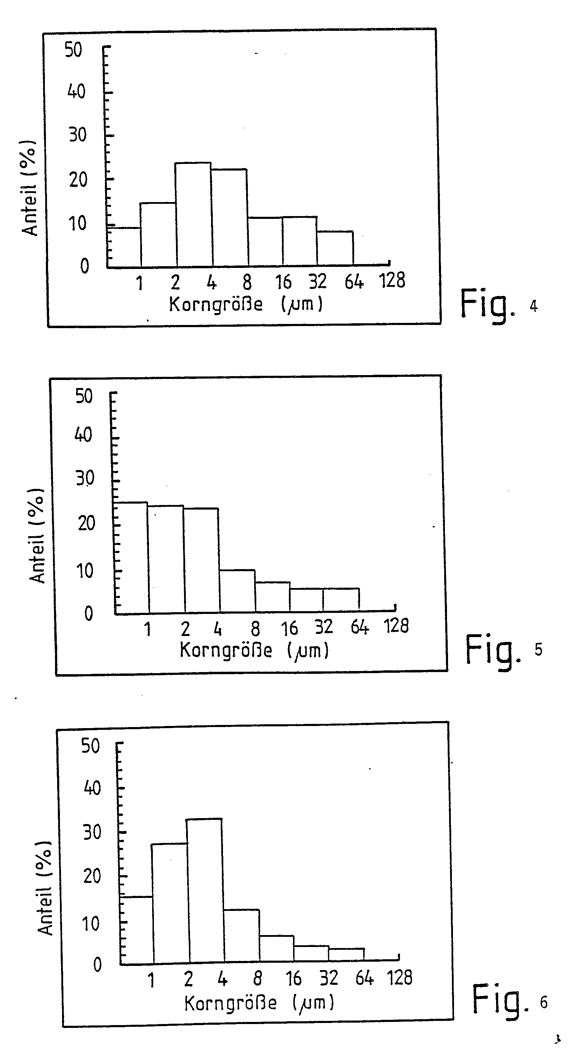

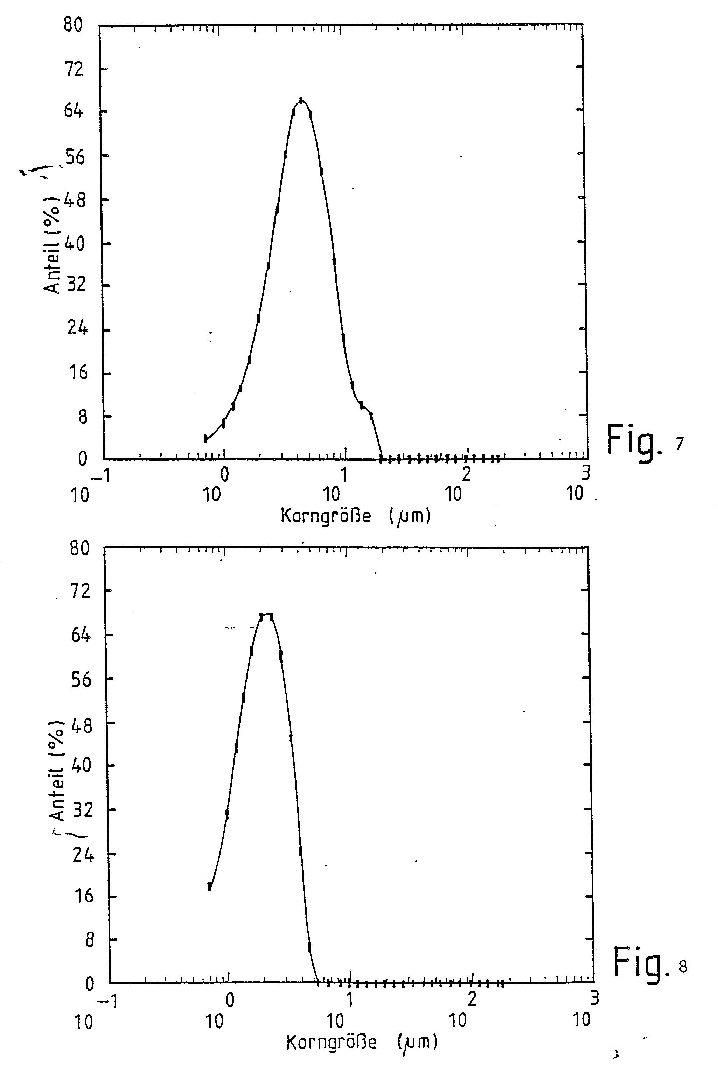

Die Korngrößenverteilung ergibt sich aus Fig. 4 und 5.

## Beispiel 6

Eine Calciumhydroxid-Wasser-Mischung mit einem Calciumhydroxidanteil von 62,5 % wurde in einem Doppelwellenmischer homogen gemischt und anschließend durch einen Siebrundbeschicker geschickt.

Bereits nach einmaligem Durchgang durch den Siebrundbeschicker trat keine Sedimentation auf. Ohne die erfindungsgemäße Bearbeitung wurde nach 24 h an einer 2000 ml-Probe ein Sedimentvolumen von 500 ml ermittelt. Die spezifische Oberfläche vergrößerte sich nach einmaligem Durchgang der Mischung durch den Siebrundbeschicker von 17 m²/g auf 35 m²/g.

Die Korngrößenverteilung nach einmaligem Durchgang durch den Siebrundbeschicker zeigt Fig. 6.

## Beispiel 7

Eine wäßrige Calciumhydroxid-Suspension mit einem Calciumhydroxidanteil von 20 % wurde in einer Perlmühle bearbeitet.

Nach der Bearbeitungszeit wurden an dem Material folgende Ergebnisse gemessen:

|  | Unbehandelt | in Perlmühle 30 min. |
|---|---|---|
| Kornspektrum | Fig. 7 | Fig. 8 |
| Sedimentvolumen (ml) | 500 | wie Ausgangsvolumen |

1 - Suspendieren von Calciumhydroxid aus der Trockenlöschung in einer Flüssigkeit
2 - Suspendiertes Calciumhydroxid aus der Naßlöschung
3 - Vorlegen der Suspension
4 - Zusatz von Netzmittel
5 - Mechanische Beanspruchung
6 - Waschen
7 - Abtrennen der flüssigen Phase
8 - Trocknen
9 - Auflockern
10 - Erhalt des trocknen, feindispersen Calciumhydroxids mit großer Oberfläche
11 - Suspendieren von Calciumhydroxid aus der Trockenlöschung
11a - Suspendiertes Calciumhydroxid aus der Naßlöschung
12 - Mit Wasser versetzen
13 - Mit Tensid mischen
14 - Mechanische Beanspruchung
15 - Waschen
16 - Abtrennung der flüssigen Phase
17 - Trocknen
18 - Auflockern
19 - Erhalt eines Calciumhydroxids mit großer Oberfläche
20 - Calciumhydroxid aus der Trockenlöschung
21 - Organische Lösungsmittel

5

22 - Zusatz des Netzmittels
23 - Mechanische Beanspruchung
24 - Abrennen der flüssigen Phase
25 - Trocknen
26 - Auflockern
27 - Erhalt eines Calciumhydroxids mit großer Oberfläche


**Ansprüche**

1. Verfahren zur Herstellung von trockenem, feindispersem Calciumhydroxid (Ca(OH)$_2$)
**dadurch gekennzeichnet, daß**
a) aus der Naßlöschung erhaltenes Calciumhydroxid (Ca(OH)$_2$) in Wasser oder ein aus der Trockenlöschung erhaltenes Calciumhydroxid in Wasser oder einem organischen Lösungsmittel suspendiert wird,
b) der Massenanteil an Calciumhydroxid in der Suspension auf 10 bis 80 % eingestellt wird,
c) die Suspension einer mechanischen Beanspruchung unterworfen wird,
d) anschließend nach einer Fest-Flüssig-Trennung die Restflüssigkeit in dem Calciumhydroxid durch schonendes Trocknen entfernt wird und
e) das getrocknete Calciumhydroxid aufgelockert wird.

2. Verfahren nach Anspruch 1,
**dadurch gekennzeichnet, daß** bei Einsatz einer Calciumhydroxid-Wasser-Suspension aus der Naßlöschung diese direkt der mechanischen Beanspruchung unterworfen wird und anschließend nach einer Fest-Flüssig-Trennung die Restflüssigkeit durch schonendes Trocknen entfernt wird.

3. Verfahren nach Anspruch 1,
**dadurch gekennzeichnet, daß** als organische Lösungsmittel Alkohole, aromatische Kohlenwasserstoffe, halogenierte Kohlenwasserstoffe oder Ether eingesetzt werden.

4. Verfahren nach einem der Ansprüche 1-3,
**dadurch gekennzeichnet, daß** der Suspension ein die Oberflächenspannung herabsetzendes Mittel in Massenanteilen von 0,2 bis 2,5 % bezogen auf Calciumhydroxid, zugegeben wird.

5. Verfahren nach einem der Ansprüche 1-4,
**dadurch gekennzeichnet, daß** der Massenanteil an Calciumhydroxid in der Suspension auf 15 bis 65 % eingestellt wird.

6. Verfahren nach einem der Ansprüche 1-5
, **dadurch gekennzeichnet, daß** bei einer pastösen Suspension mit einem Massenanteil an Calciumhydroxid von 40 bis 80 % die mechanische Beanspruchung durch Kneten, Walzen, Pressen, Stampfen, Reiben, Spritzen oder durch Anwendung energiereicher Schwingungen erfolgt.

7. Verfahren nach Anspruch 6,
**dadurch gekennzeichnet, daß** der Massenanteil an Calciumhydroxid auf 55 bis 65 % eingestellt wird.

8. Verfahren nach einem der Ansprüche 1-4,
**dadurch gekennzeichnet, daß** bei einer Suspension mit einem Massenanteil an Calciumhydroxid von 10 bis 40 % die mechanische Beanspruchung durch Mahlen, intensives Rühren oder Spritzen gegen Prallkörper erfolgt.

9. Verfahren nach Anspruch 8,
**dadurch gekennzeichnet, daß** der Massenanteil an Calciumhydroxid in der Suspension auf 15 bis 30 % eingestellt wird.

10. Verfahren nach Anspruch 8 oder 9,
**dadurch gekennzeichnet, daß** die Suspension in einer Perl- oder Kugelmühle behandelt wird.

11. Verfahren nach Anspruch 1,
**dadurch gekennzeichnet, daß** im Falle der Suspendierung des gelöschten Calciumhydroxids vor dem Trocknen in Wasser vor dem schonenden Trocknen das Calciumhydroxid in einem ein-oder mehrstufigen Waschprozeß mit organischen Lösungsmitteln behandelt wird.

12. Verfahren nach Anspruch 11,
**dadurch gekennzeichnet, daß** als organische Lösungmittel Alkohle, aromatische Kohlenwasserstoffe, halogenierte Kohlenwasserstoffe oder Ether eingesetzt werden.

13. Verfahren nach Anspruch 13,
**dadurch gekennzeichnet, daß** als Alkohol Ethylalkohol eingesetzt wird.

14. Verfahren nach Anspruch 1,
**dadurch gekennzeichnet,**daß das Trocknen im Vakuum durchgeführt wird.

Fig. 1

Fig. 2

Fig. 3

Fig. 4

Fig. 5

Fig. 6

Fig. 7

Fig. 8

| Europäisches Patentamt | EUROPÄISCHER RECHERCHENBERICHT | Nummer der Anmeldung |
|---|---|---|
| | | EP 89 10 1410 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 177 769 (RHEINISCHE KALKSTEINWERKE) * Insgesamt * | 1-3,5-7 ,11-14 | C 01 F 11/02 C 04 B 2/04 |
| Y | | 8 | |
| | --- | | |
| Y | NL-A- 268 205 (RHEINISCHE KALKSTEINWERKE) * Ansprüche 3-5,7; Figuren * | 1-3,5-7 ,11-14 | |
| | --- | | |
| Y | CHEM.- ING.- TECH., Band 59, Nr. 3, 1987, Seiten 228-235, VCH Verlagsgesellschaft mbH, Weinheim, DE; H. BECKER: "Hochreaktive Kalkhydrat-Suspensionen für industrielle chemische Prozesse-Herstellung und Eigenschaften" * Figur 3 * | 8 | |
| | --- | | |
| A | DE-A-2 637 504 (RHEINISCH-WESTFÄLISCHE KALKWERKE) * Ansprüche * | 8 | |
| | --- | | RECHERCHIERTE SACHGEBIETE·(Int. Cl.4) |
| A | PATENT ABSTRACTS OF JAPAN, Band 9, Nr. 218 (C-301)[1941], 5. September 1985; & JP-A-60 81 021 (TOKIO KANOU) 09-05-1985 | 5-7 | C 01 F 11/00 C 04 B 2/00 |
| | --- | | |
| A | ZEMENT-KALK-GIPS, Band 37, Nr. 10, Oktober 1984, Seiten 530-533, Wiesbaden-Biebrich, DE; F. SCHMITZ et al.: "Trockengelöschtes Kalkhydrat mit grosser Oberfläche-Ein wirksames Reagenz zur Bindung saurer Abgasbestandteile" | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18-05-1989 | ZALM W.E. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
·····································································
& : Mitglied der gleichen Patentfamilie, übereinstimmendes Dokument